(19) Europäisches Patentamt
European Patent Office
Office européen des brevets

(11) Veröffentlichungsnummer: **0 083 735**
**B1**

# (12) EUROPÄISCHE PATENTSCHRIFT

(45) Veröffentlichungstag der Patentschrift: **12.03.86**

(51) Int. Cl.⁴: **C 01 B 3/00**

(21) Anmeldenummer: **82111220.8**

(22) Anmeldetag: **03.12.82**

(54) **Magnesiumhaltiges Metallgranulat zur Speicherung von Wasserstoff.**

(30) Priorität: **03.12.81 DE 3147839**

(43) Veröffentlichungstag der Anmeldung: **20.07.83 Patentblatt 83/29**

(45) Bekanntmachung des Hinweises auf die Patenterteilung: **12.03.86 Patentblatt 86/11**

(84) Benannte Vertragsstaaten: **BE FR GB IT LU NL**

(56) Entgegenhaltungen:
**FR - A - 2 441 652**

**CHEMICAL ABSTRACTS, Band 95, Nr. 12, September 1981, Seite 159, Nr. 100548q, Columbus, Ohio, USA, B. DARRIET et al.: "Storage of hydrogen in high-magnesium rare earth-magnesium alloys"**

(73) Patentinhaber: **Kernforschungsanlage Jülich Gesellschaft mit beschränkter Haftung, Postfach 1913, D-5170 Jülich 1 (DE)**

(72) Erfinder: **Welter, Jean-Marie, Dr., Wirichbongardstrasse 53, D-5100 Aachen (DE)**
Erfinder: **Rudman, Peter, Prof.Dr., 321 Cupsaw Dr., Ringwood, N.J. 07456 (US)**

**EP 0 083 735 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf die Verwendung eines magnesiumhaltigen Metallgranulats, dessen Granulatkörner als Basismetall Magnesium enthalten, zur Speicherung von Wasserstoff.

Magnesium wird gegenüber anderen für die Speicherung von Wasserstoff geeigneten Metallen oder Metallegierungen, wie insbesondere titan- oder lanthanhaltigen Metallegierungen nicht nur wegen seiner geringeren Materialkosten, sondern vor allem wegen seines geringeren spezifischen Gewichts als Speichermaterial bevorzugt. Die Hydrierung

$$Mg + H_2 \leftrightarrows MgH_2$$

ist jedoch bei Magnesium im allgemeinen schwieriger zu erreichen, weil die Oberfläche des Magnesiums an Luft rasch oxidiert und stabile MgO- und/oder $Mg(OH)_2$-Oberflächenschichten gebildet werden. Diese Schichten hemmen sowohl die Dissoziation von Wasserstoffmolekülen als auch die Adsorption von gebildeten Wasserstoffatomen und deren Transport von der Oberfläche der Granulatkörner in die Magnesiumspeichermassen. Es wird angestrebt, die hierdurch bedingten Nachteile bei der Wasserstoffspeicherung in Magnesium durch Katalysatoren zu verbessern.

Bekannt ist es, die Speicherqualität von Magnesium und Magnesiumlegierungen dadurch zu steigern, dass man Magnesium, das stabile Oxide (und stabile Hydroxide) bildet, mit einer Metallphase legiert, die instabile Oxide (und instabile Hydroxide) bildet. Für stabile und instabile Hydroxide gelten die nachfolgend für Oxide gemachten Ausführungen analog. Unter normalen Hydrierungsbedingungen reicht bei einer solchen Legierung der Sauerstoffpartialdruck nur zur Bildung stabiler Oxide aus. Die Bildner instabiler Oxide werden bei der Hydrierung reduziert und bleiben als Metalle erhalten. Eine solche Legierung ist beispielsweise $Mg_2Ni$, bei der Ni instabile Oxide bildet. Bei dieser Legierung ergaben thermodynamische Untersuchungen, dass die Oberflächenreaktion $Mg_2Ni + O_2 \longrightarrow 2\,MgO + Ni$ über Nickelmetalleinlagerungen abläuft, die die Dissoziation-Adsorption-Reaktion katalysieren. Vergleiche A. Seiler et al, Journal of Less-Common Metals 73, 1980, Seiten 193 ff.

Eine weitere Möglichkeit zur Katalyse der Dissoziation-Adsorption-Reaktion an der Oberfläche von Magnesium ist auch die Ausbildung einer Zwei-Phasen-Legierung, wobei die eine Phase Hydridbildner, die andere Phase Katalysator ist. So ist es bekannt, galvanisch vernickeltes Magnesium als Wasserstoffspeicher einzusetzen, vgl. F.G. Eisenberg et al, Journal of Less-Common Metals 74, 1980, Seiten 323 ff. Dabei ergaben sich jedoch Probleme bei der Adhäsion und Verteilung des Nickels auf der Magnesiumoberfläche.

Um eine sehr dichte und gut haftende Katalysatorphase unter Ausbildung allein von Gleichgewichtsphasen zu erhalten, ist es für die Speicherung von Wasserstoff auch bekannt, eine eutektische Mischung von Magnesium als Hydrid bildende Phase mit Magnesiumkupfer ($Mg_2Cu$) zu verwenden, vgl. J. Gesonar et al, Zeitschrift für Physikalische Chemie, Neue Folge 116, 1979, Seiten 215 ff. Die mit diesem magnesiumhaltigen Granulat erreichte Speicherkapazität pro Werkstoffvolumen erfüllt jedoch wegen der für das Eutektikum erforderlichen Magnesiumkupfermenge keine hohen Ansprüche.

Aufgabe der Erfindung ist es, ein magnesiumhaltiges Metallgranulat für die Speicherung von Wasserstoff aufzufinden, das nicht nur eine hohe Speicherfähigkeit für Wasserstoff pro Volumen aufweist, sondern das auch in einfacher Weise herstellbar ist.

Diese Aufgabe wird gemäss der Erfindung durch Verwendung eines magnesiumhaltigen, in Patentanspruch 1 angegebenen Metallgranulats gelöst. Die als Basismetall Magnesium enthaltenden Granulatkörner weisen an ihrer Oberfläche Eisen oder eine eisenreiche Legierung auf, wobei der Gesamt-Eisengehalt zwischen 1 und 20 Gew.-% Eisen beträgt. Das Eisen wirkt bei der Einlagerung von Wasserstoff als Katalysator. Ein eisenhaltiges Magnesiumgranulat dieser Art wird in US-PS 4 072 514 beschrieben. Es wird bei dem dort angegebenen Verfahren als Reaktant bei der Herstellung von Wasserstoff eingesetzt.

Eisen ist im Magnesium nur vernachlässigbar gering löslich und bildet mit Magnesium keine intermetallische Verbindung. Wegen dieses Verhaltens von Magnesium und Eisen lassen sich die Magnesiumgranulatkörner in einfacher Weise mit Eisen belegen. So werden beispielsweise bei der Granulierung von mit feinen Eisenteilchen versetztem Magnesium an der Oberfläche der Granulatkörner in ausreichender Menge Eisenteilchen freigelegt, die im Magnesium ohne eine die Hydrierung der Granulatkörner hemmende Zwischenschicht eingebettet sind. Auch behindert eine ggf. nachfolgende Oxidation der eisenbelegten Granulatkörner das Einlagern von Wasserstoff nicht, da das instabile Eisenoxid und das Eisenhydrid unter üblichen Hydrierungsbedingungen für Magnesium bei Temperaturen zwischen etwa 300 und 400°C reduziert werden. Um für den katalytischen Effekt eine ausreichende Belegung der Oberfläche der Granulatkörner mit Eisen zu erreichen, genügt ein Eisengehalt zwischen 1 und 20 Gew.-%. Die durch Magnesiumanteil im Granulat vorgegebene potentielle Speicherfähigkeit pro Granulatvolumen wird somit vom Katalysatoranteil nur unwesentlich beeinträchtigt.

Bevorzugt wird das Metallgranulat nach Patentanspruch 2 in folgender Weise hergestellt:

Zunächst wird Magnesiummetall oder eine Magnesium enthaltende Legierung zusammen mit feinen Eisenteilchen oder feinen Teilchen einer eisenreichen Legierung in einer Menge von 1 bis 20 Gew.-% Eisen bezogen auf das Endprodukt geschmolzen. Bei Schmelztemperatur des Magnesiums verbleiben die Eisenteilchen in fester Phase. Sie werden in der Schmelze homogen verteilt. Diese Verteilung wird beim Erstarren der Schmelze beibehalten, was insbesondere durch rasches Abkühlen der Schmelze gelingt. Das erstarrte Material lässt sich zur Ausbildung von Granulat zerspanen. Dabei werden an der Oberfläche der gebildeten Granulatkörner in ausreichender Menge Eisenteilchen freigelegt, die im Magnesium auf der Oberfläche der Granulatkörner eingebettet sind. Zwischen den Eisenteilchen und dem Magnesium befinden sich keine die Hydrierung des Metallgranulats hemmende Zwischenschichten.

Ein Zerspanen zur Granulierung des die Eisenteilchen enthaltenden Materials nach Erstarren der Schmelze entfällt bei einem Verfahren, wie es in Patentanspruch 3 gekennzeichnet ist. Dieses Verfahren ist bevorzugt für eine kontinuierliche oder quasikontinuierliche Granulatherstellung geeignet. Die die Eisenteilchen in homogener Verteilung enthaltende Schmelze wird danach durch Versprühen granuliert, beispielsweise durch Versprühen in einem Zerstäuberturm oder durch Aufsprühen auf eine gekühlte rotierende Scheibe. Die erstarrten Partikel bilden ein feinkörniges Metallgranulat mit an der Oberfläche der Granulatkörner eingebetteten Eisenteilchen.

Weitere vorteilhafte Massnahmen zur Herstellung des Granulats, die Gegenstand der Patentansprüche 4 bis 9 sind, sowie erreichte Speicherdaten bei der Speicherung von Wasserstoff, die sich bei Verwendung des magnesium- und eisenhaltigen Metallgranulats gemäss der Erfindung ergeben, werden im folgenden anhand von Ausführungsbeispielen angegeben. Die Zeichnung zeigt:

Fig. 1 Wasserstoffbeladung eines Granulats aus Magnesium mit 10 Gew.-% Eisen bei konstantem Druck von 1,5 MPa und konstanter Temperatur von 400°C in Abhängigkeit von der Beladungszeit,

Fig. 2 Anlage zur quasikontinuierlichen Herstellung von eisenhaltigem Magnesiumgranulat.

Es wurde Eisenschwamm von mittlerer Korngrösse zwischen 20 bis 40 µm Durchmesser mit Magnesiumchips gemischt und die Mischung kompaktiert. Die Mischung enthielt 10 Gew.-% Eisen. In einem Graphittiegel wurde die Mischung geschmolzen. Statt eines Graphittiegels ist mit Vorteil ein Tiegel aus Eisen oder aus einer eisenreichen Legierung, wie Grauguss oder Strahl einsetzbar, denn Eisentiegel reagieren mit den zuzusetzenden Eisenteilchen nicht. Eisentiegel reagieren aber auch nicht mit Wasserstoff, so dass die Mischung bei Verwendung von Eisentiegeln in Wasserstoffatmosphäre geschmolzen werden kann. Das Schmelzen in Graphittiegeln erfolgt unter Inertgasatmosphäre, im Ausführungsbeispiel wurde Argon eingesetzt. Die Schmelztemperatur lag bei etwa 800°C. Durch Rühren der Schmelze wird dafür Sorge getragen, dass die Eisenteilchen in der Schmelze homogen verteilt werden. Um diese Verteilung beizubehalten, wird die Schmelze rasch abgekühlt. Nach dem Abkühlen wurde das Schmelzprodukt zerspant.

Die mit dem vorbeschriebenen eisenhaltigen Magnesiumgranulat erreichte Speicherung von Wasserstoff ist in Fig. 1 der Speicherung von Wasserstoff in reinem Magnesiumgranulat gegenübergestellt. Im Diagramm nach Fig. 1 ist der Anteil der durch Wasserstoffeinlagerung hydrierten Magnesiumfraktion in Abhängigkeit von der Beladungszeit angegeben. Kurve I zeigt die Beladung von mit Eisen katalysiertem Magnesiumgranulat, Kurve II die Beladung unkatalysierten Granulats aus reinem Magnesium. Beide Granulate waren vor ihrer Beladung in gleicher Weise aktiviert worden. Hierzu wurden 20 Hydrierungszyklen vorgenommen, wobei das Granulat in Wasserstoffatmosphäre bei 1,5 MPa und sich periodisch jeweils innerhalb von zirka 30 Minuten zwischen 350 und 450°C verändernder Temperatur behandelt wurde. Die Kurve I im Vergleich mit Kurve II zeigt deutlich, dass die Addition von Eisen zu Magnesium zu einer signifikant günstigeren Hydrierungskinetik führt. Bei gleicher Beladungszeit waren im eisenkatalysierten Granulat (Kurve I) etwa 1,5mal soviel Magnesiummengen hydriert, wie in reinem Magnesiumgranulat (Kurve II).

Nach der in Fig. 1 wiedergegebenen Beladung mit Wasserstoff wurden beide Granulate für einen Tag bei Atmosphärendruck Luft ausgesetzt. Im Anschluss daran wurden die Granulate unter gleichen Bedingungen erneut mit Wasserstoff beladen. Es ergab sich zwar, dass die Wasserstoffeinlagerung langsamer verlief, signifikant war jedoch, dass jetzt nur noch 20% des nicht mit Eisen katalysierten Magnesiumgranulats beladen werden konnte, während vom mit Eisen katalysierten Magnesiumgranulat nahezu 100% zu hydrieren waren. Trotz teilweiser Oxidation des eisenenthaltenden Granulats blieb somit die hohe Wasserstoffbe- und -entladefähigkeit des Speichermaterials erhalten.

Es wurde ein Magnesiumgranulat mit 4 Gew.-% Eisen hergestellt. Das Eisen war homogen auf der Oberfläche der Granulatkörner verteilt. Das Granulat wurde wie oben beschrieben in 20 Hydrierungszyklen aktiviert. Die Beladungskapazität dieses Granulats lag bei gleichen Beladungsbedingungen trotz geringeren Eisengehalts nur wenig unterhalb der Werte, die aus Fig. 1 für Magnesiumgranulat mit 10 Gew.-% Eisen (Kurve I) ersichtlich sind.

Bei höherem Eisengehalt ist ein günstigeres Einlagerungsverhalten für Wasserstoff erreichbar. Es geht jedoch die Beladungskapazität des Magnesiumgranulats pro Speichervolumen zurück. Auch ist das zunehmende spezifische Gewicht des Granulats zu berücksichtigen. Der Eisengehalt wird daher zweckmässig auf 20 Gew.-% Eisen begrenzt.

Statt reinem Eisen kommen als Katalysator auch eisenreiche Legierungen in Betracht, wie beispielsweise Massenstahl, Eisenschrott der Stahlschrott. Als Speichermaterial sind neben Magnesium auch Magnesiumlegierungen, wie Magnesium-Nickel, Magnesium-Kupfer oder lithium-, zink- oder manganhaltiges Magnesium verwendbar.

In Fig. 2 ist eine Anlage zur quasikontinuierlichen Herstellung von eisenhaltigem Mangangranulat schematisch wiedergegeben. Die Anlage weist einen Schmelztiegel 1 aus Eisen oder Stahl auf, in dem das über eine Schleuse 2 eingebrachte Material mittels einer Mantelheizung 3 oder wahlweise mittels in den Schmelztiegel hineinragender stahlummantelten elektrischen Heizelementen 4 schmelzbar ist. Wärmeverluste werden durch eine thermische Isolation 5 niedrig gehalten. In den Schmelztiegel 2 ist ein Rührwerk 6 zur Durchmischung der Schmelze eingeführt. Am Boden des Schmelztiegels befindet sich ein Auslass 7 zum Zerstäubungsturm 8. Im oberen Bereich des Zerstäubungsturms mündet eine Druckgasleitung 9 mit Expansionsstutzen 10. Das aus dem Expansionsstutzen 10 ausströmende kalte Gas unterstützt die Auflösung des vom Auslass 7 abfliessenden Schmelzstrahls in Tropfen, die bei ihrem Fall durch den Zerstäubungsturm erstarren. Für die Zerstäubung des Schmelzstrahls kann zur Verhinderung

von unerwünschten chemischen Reaktionen, insbesondere zur Verhinderung von Oxidation ein Inertgas, wie Stickstoff oder Argon benutzt werden. Vorteilhaft wird Schmelze eingeblasen, um das Material bereits in dieser Phase mit Wasserstoff zu versetzen. Dies fördert die spätere Aufnahmebereitschaft des erzeugten Granulats für Wasserstoff und verkürzt die Aktivierungsbehandlung erheblich.

Aus dem Zerstäubungsturm 8 gelangt das eingeführte Gas über einen Absaugstutzen 11 zur Aufbereitungseinheit 12, in der es gekühlt , gereinigt und wieder komprimiert wird. Über eine Zweigleitung 13 der Druckgasleitung 9 kann im Schmelztiegel 1 eine Gasatmosphäre von einigen bar aufrechterhalten werden. Der Druck wird mittels eines Ventils 14 eingestellt, so dass beim Schmelzen ein übermässiges Verdampfen des Magnesiums unterbunden ist.

Um eine quasikontinuierliche Herstellung von Metallgranulat zu gewährleisten, werden Magnesiumstücke zusammen mit Eisenschwamm oder Eisenpulver mit maximalen Korngrössen bis zu 100 µm über die mittels eines Verschlusses 15 vom Schmelzraum im Schmelztiegel 1 absperrbare Schleuse 2 eingeführt. Die Schmelztemperatur ist auf zirka 800°C eingestellt, die Eisenteilchen bleiben somit in der Schmelze in fester Phase erhalten. Durch Rühren der Schmelze werden die Eisenteilchen homogen verteilt. Die Schmelze tritt am Auslass 7 über in der Zeichnung nicht dargestellte Düsen aus. Im Zerstäubungsturm wird der Schmelzstrahl vom Gasstrom aus dem Expansionsstutzen 10 angeblasen und zerfällt in einzelne Tropfen. Die Tropfen erstarren bei ihrem Fall im Zerstäubungsturm zu Granulatkörnern, die sich am Boden 16 des Zerstäubungsturms 8 sammeln. Von hier werden sie über einen Granulatabzug 17 in einen Auffangbehälter 18 ausgetragen. Bei Entleerung des Auffangbehälters bleibt der Granulatabzug 17 geschlossen. Wird das Granulat in Wasserstoffatmosphäre erzeugt, so ist es zweckmässig, den Auffangbehälter auf einer Temperatur von zirka 350°C zu halten, um die Hydrierung des Materials fortzuführen. Je länger das Granulat in Wasserstoffatmosphäre gehalten wird, um so geringer ist der Aufwand für das Aktivieren des erzeugten Materials.

Zur Vermeidung unerwünschter Oxidation des Magnesiumgranulats durch sauerstoffhaltige Gase sind der Schmelzraum des Schmelztiegels 1, der Zerstäuberturm 8, die Schleuse 2 und der Auffangbehälter 18 evakuiert. Alle vorgenannten Anlagenteile können über Saugleitungen 19a bis 19d, die Ventile 20a bis 20d aufweisen und in eine Sammelleitung 21 münden, mittels einer Vakuumpumpe 22, an deren Saugseite die Sammelleitung 21 angeschlossen ist, entgast werden.

Die Granulatkorngrösse lässt sich in Abhängigkeit von der Einstellung des Düsenquerschnitts am Auslass 7 sowie in Abhängigkeit vom Zerstäuberstrahl der an Expansionsstutzen 10 und über ein Ventil 23 einstellbar ist, austritt, beeinflussen. Die Auflösung des Schmelzstrahls wird so reguliert, dass das Granulat Korngrössen von 500 µm nicht wesentlich überschreitet.

In einem weiteren Ausführungsbeispiel wurde ausgehend von marktüblichem $MgH_2$-Pulver mit Korngrössen unter 10 µm und Eisenschwamm von mittlerer Korngrösse zwischen 20 bis 40 µm Durchmesser unter Verwendung eines Rührwerks eine homogene Mischung hergestellt. Die Mischung wurde in ein verschliessbares Reaktionsgefäss eingefüllt. Das Reaktionsgefäss war mit einem Heizmantel umgeben und wies ein Überströmventil auf. Zur Sinterung der Mischung wurde eine Temperatur von 600°C und ein Druck von 0,1 MPa eingestellt. Der aus der Mischung entweichende Wasserstoff wurde über das Überströmventil abgelassen und nach Durchleiten durch eine Wasserflasche verfackelt. Nach Austreiben des Wasserstoffs und Erlöschen der Fackel wurde das gesinterte Material abgekühlt. Es enthielt 100 Gew.-% Eisen. Das gesinterte Material war porös, so dass ein grobes Zerspanen des Materials bereits ausreichend war, um ein geeignetes Granulat herzustellen. Das Granulat wurde in üblicher Weise aktiviert. Es wurden 20 Hydrierungszyklen vorgenommen, wobei das Granulat in Wasserstoffatmosphäre bei 1,5 MPa und — wie oben bereits angegeben — sich zwischen 350 und 450°C periodisch verändernder Temperatur behandelt wurde.

Die mit dem so hergestellten und aktivierten Magnesiumgranulat erreichten Hydrierungswerte wichen nur unwesentlich von den in Fig. 1 wiedergegebenen Werten ab.

**Patentansprüche**

1. Verwendung von magnesiumhaltigem Metallgranulat, dessen Granulatkörner als Basismetall Magnesium enthalten und deren Oberfläche Eisen oder eine eisenreiche Legierung als Katalysator aufweist, wobei der Gesamt-Eisengehalt der Granulatkörner zwischen 1 und 20 Gew.-% beträgt, als Speichermaterial für Wasserstoff.

2. Verfahren zur Herstellung des für die Speicherung von Wasserstoff geeigneten magnesiumhaltigen Metallgranulats gemäss Anspruch 1, dadurch gekennzeichnet, dass Magnesiummetall oder eine Magnesiummetall enthaltende Legierung zusammen mit feinen Eisenteilchen oder feinen Teilchen einer eisenreichen Legierung in einer Menge von 1 bis 20 Gew.-% Eisen bezogen auf das Endprodukt geschmolzen wird, dass die Eisen- bzw. Eisenlegierungsteilchen in der Magnesiumschmelze homogen verteilt werden, die Verteilung beim Erstarren der Schmelze beibehalten wird und das erstarrte Material in bekannter Weise granuliert wird.

3. Verfahren nach Anspruch 2, dadurch gekennzeichnet, dass die Granulation durch Versprühen der Schmelze erfolgt.

4. Verfahren nach einem der Ansprüche 2 oder 3, dadurch gekennzeichnet, dass das Schmelzen in einem Tiegel aus Eisen oder aus einer eisenhaltigen Legierung erfolgt.

5. Verfahren nach einem der Ansprüche 2 bis 4, dadurch gekennzeichnet, dass das Magnesium zusammen mit Eisenschwamm oder Eisenpulver mit Korngrössen gleich oder kleiner 100 µm geschmolzen wird.

6. Verfahren nach einem der Ansprüche 2 bis 5, dadurch gekennzeichnet, dass in Wasserstoffatmosphäre geschmolzen wird.

7. Verfahren zur Herstellung des für die Speicherung von Wasserstoff geeigneten magnesiumhaltigen Metallgranulats gemäss Anspruch 1, dadurch gekennzeichnet, dass Pulver aus Magnesiummetall oder einer Magnesiummetall enthaltenden Legierung zusammen mit feinen Eisenteilchen in einer Menge von 1 bis 20 Gew.-% Eisen bezogen auf das Endprodukt homogen vermischt wird, dass die Mischung gesintert und das gesinterte Material in bekannter Weise granuliert wird.

8.Verfahren nach Anspruch 7, dadurch gekennzeichnet, dass als Pulver $MgH_2$ verwendet wird.

9. Verfahren nach einem der Ansprüche 2 bis 8, dadurch gekennzeichnet, dass das magnesiumhaltige Metallgranulat in Wasserstoffatmosphäre bei 1,5 MPa und einer Temperatur zwischen 350 und 450°C aktiviert wird.

**Claims**

1. Use of a magnesium-containing metal granulate, whose granulate particles contain magnesium as their base metal, and whose surface comprises iron or an iron-rich alloy as catalyst, the total iron content of the granulate particles amounting to between 1 and 20 % by weight, as storage material for hydrogen.

2. Method of producing the metal granulate which contains magnesium and which is suitable for the storage of hydrogen according to claim 1, characterised in that magnesium metal or an alloy containing magnesium metal is melted together with fine iron particles or fine particles of an iron-rich alloy in a quantity of from 1 to 20% by weight of iron relatively to the the end product, that the iron particles or iron alloy particles are distributed homogeneously in the magnesium melt, the distribution is maintained during solidification of the melt, and the solidified material is granulated in known manner.

3. Method according to claim 2, characterised in that the granulation is effected by spraying the melt.

4. Method according to one of claims 2 or 3, characterised in that the melting is carried out in a crucible made of iron or of an iron-containing alloy.

5. Method according to one of claims 2 to 4, characterised in that the magnesium is melted together with sponge iron or iron powder with particle sizes equal to or less than 100 µm

6. Method according to one of claims 2 to 5, characterised in that the melting is carried out in a hydrogen atmosphere.

7. Method for the production of the magnesium-containing metal granulate suitable for the storing of hydrogen according to claim 1, characterised in that powder consisting of magnesium metal or an alloy containing magnesium metal is mixed homogeneously with fine iron particles in a quantity of from 1 to 20% by weight of iron relatively to the end product, that the mixture is sintered, and the sintered material is granulated in known manner.

8. Method according to claim 7, characterised in that $MgH_2$ is used as the powder.

9. Method according to one of claims 2 to 8, characterised in that the magnesium-containing metal granulate is activated in a hydrogen atmosphere at 1.5 MPa and a temperature of between 350 and 450°C.

**Revendications**

1. Utilisation d'un granulé métallique contenant du magnésium, dont les grains contiennent du magnésium comme métal de base et dont la surface présente du fer ou un alliage riche en fer comme catalyseur, la teneur totale en fer des grains du granulé étant comprise entre 1 et 20% en poids, comme matière de stockage pour de l'hydrogène.

2. Procédé de préparation du granulé métallique contenant du magnésium et convenant au stockage de l'hydrogène suivant la revendication 1, caractérisé en ce qu'il consiste à faire fondre le magnésium métallique ou un alliage contenant du magnésium métallique en même temps que de fines particules de fer ou de fines particules d'un alliage riche en fer en une quantité de 1 à 20% en poids de fer par rapport au produit final, à répartir d'une manière homogène les particules de fer ou d'alliage de fer dans la masse de magnésium fondue, à conserver la répartition lors de la solidification de la masse fondue, at à granuler la matière solidifiée d'une manière en soi connue.

3. Procédé suivant la revendication 2, caractérisé en ce qu'il consiste à effectuer la granulation par pulvérisation de la masse fondue.

4. Procédé suivant l'une des revendications 2 ou 3, caractérisé en ce qu'il consiste à effectuer la fusion dans un creuset en fer ou en un alliage contenant du fer.

5. Procédé suivant l'une des revendications 2 à 4, caractérisé en ce qu'il consiste à fondre le magnésium en même temps que de l'éponge de fer ou de la poudre de fer ayant une granulométrie égale ou inférieure à 100 µm.

6. Procédé suivant l'une des revendications 2 à 5, caractérisé en ce qu'il consiste à effectuer la fusion dans une atmosphère d'hydrogène.

7. Procédé de préparation du granulé métallique contenant du magnésium qui convient pour stocker l'hydrogène, suivant la revendication 1, caractérisé en ce qu'il consiste à mélanger de manière homogène la poudre constituée de magnésium métallique ou d'un alliage contenant du magnésium métallique en même temps que de fines particules de fer en une quantité de 1 à 20% en poids de fer par rapport au produit final, à fritter le mélange et à granuler la matière frittée d'une manière en soi connue.

8. Procédé suivant la revendication 7, caractérisé en ce qu'il consiste à utiliser comme poudre $MgH_2$.

9. Procédé suivant l'une des revendications 2 à 8, caractérisé en ce qu'il consiste à activer le granulé métallique contenant du magnésium dans une atmosphère d'hydrogène sous 1,5 MPa et à une température comprise entre 350 et 450°C.

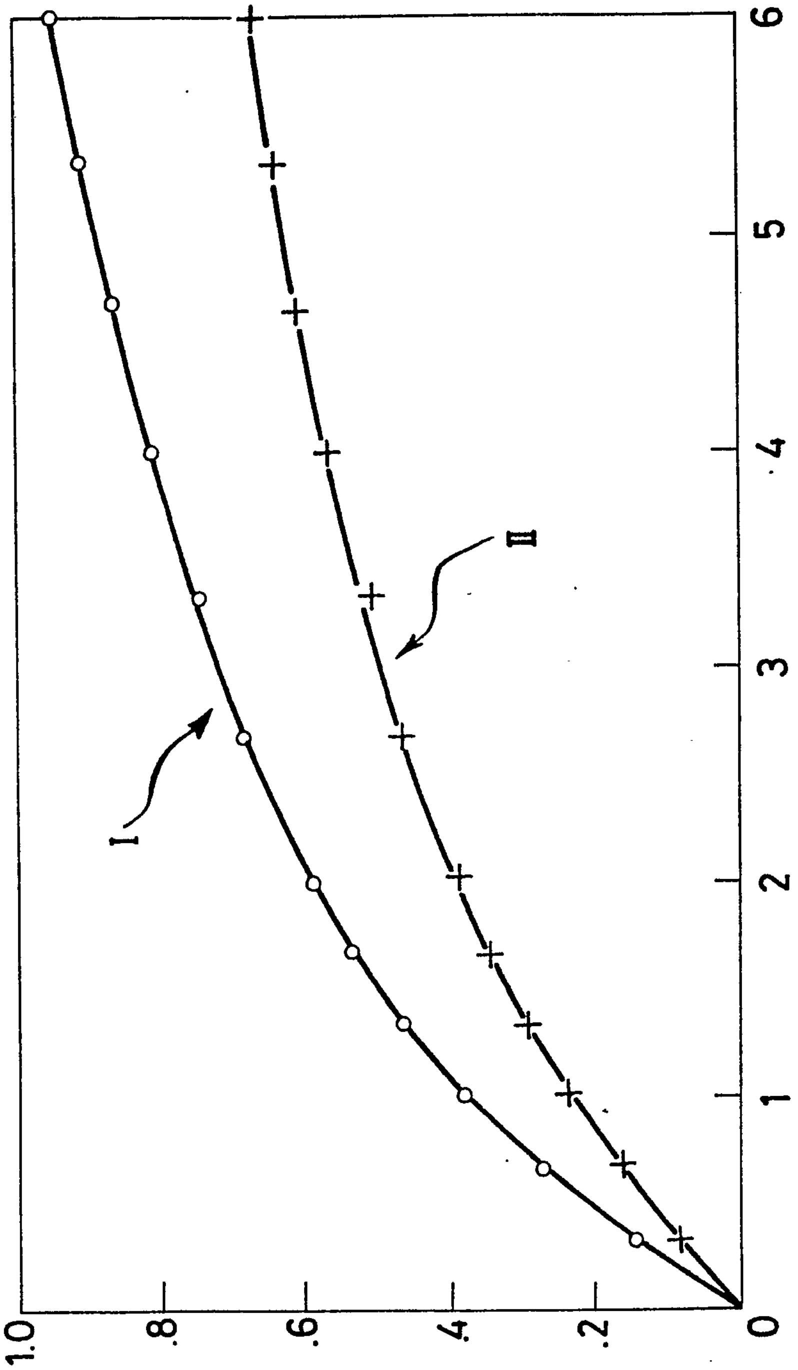


FIG. 1

FIG. 2

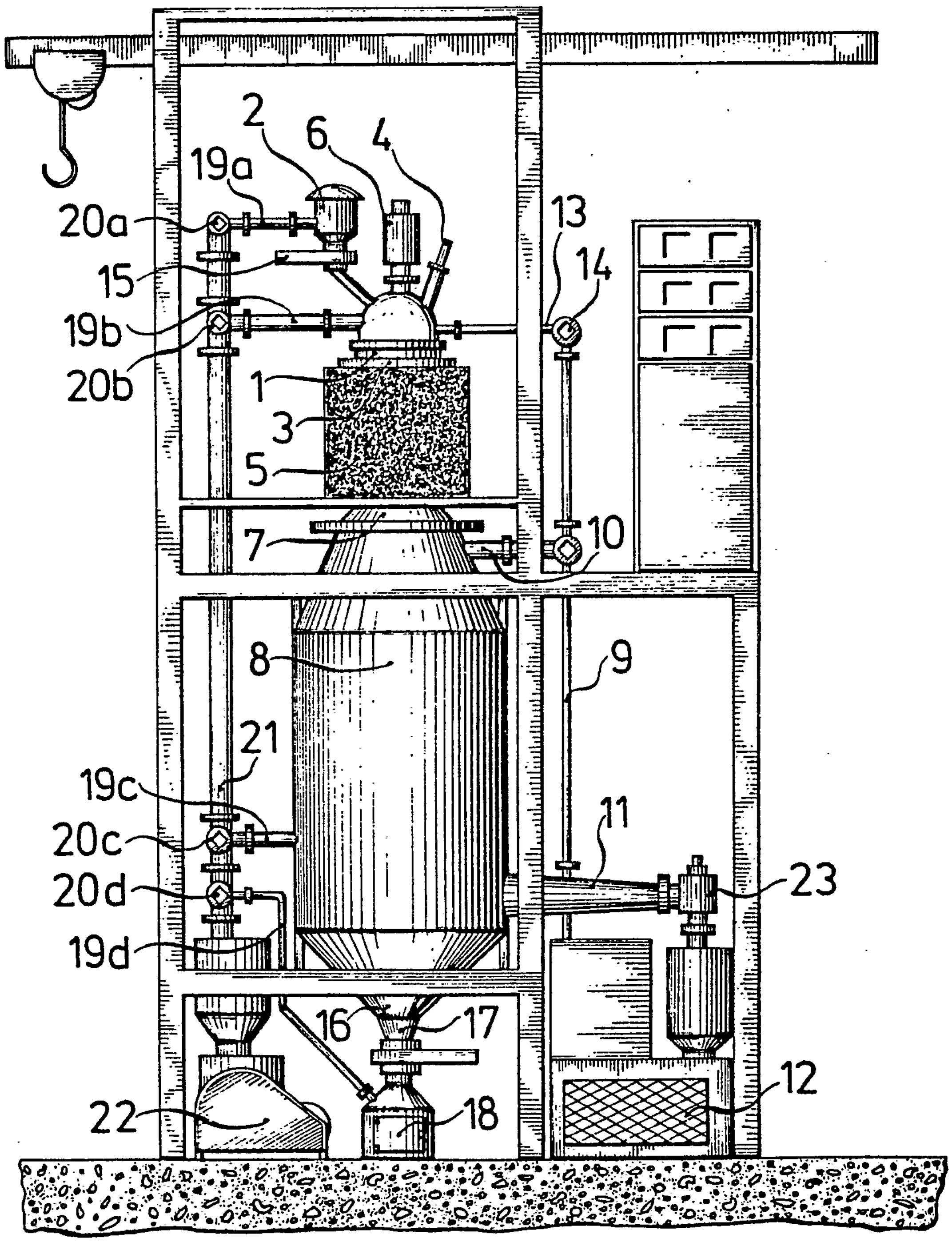
2
6
4
19a
20a
13
14
15
19b
20b
1
3
5
7
10
8
9
21
19c
20c
11
23
20d
19d
16
17
12
22
18